# EUROPEAN PATENT APPLICATION

(11) **EP 2 369 481 A2**
(43) Date of publication of application: **28.09.2011**
(21) Application number: 11002249.8
(22) Date of filing: 18.03.2011
(51) Int. Cl.: G06F 11/07, G06F 11/30

(54) **A system for detecting usability problems of users while using their mobile devices**

(30) Priority: 22.03.2010 IL 20465210
(71) Applicant: Deutsche Telekom AG, 53113 Bonn (DE)
(72) Inventor: Shapira, Bracha, Beer Sheva 84728 (IL); Mimran, David, Tel Aviv 64516 (IL); Meyer, Joachim, Omer 84965 (IL); Rokach, Lior, Omer 84965 (IL); Peretz, Shoval, Omer 84965 (IL); Glass, Gregor, Berlin 10781 (DE); Henke, Katja, Berlin 12159 (DE); Schneider, Lutz, Berlin 13509 (DE)
(74) Representative: Flaccus, Rolf-Dieter

(57) **Abstract**

A system for detecting and solving usability problems of users while using their mobile devices, which comprises an interception module at the user's side, for tracking the user's activities and interaction with applications, for generating session data that is stored in a session database; a server that receives the tracked session data for performing intelligent analysis used to enhance usability of application, and for carrying out smart targeted marketing; a service introduction module at the user's side, for providing data about relevant services to the user, in response to the data collected about the user's activities and according to pre-defined user and task models; an on-line help module, for providing in context online help to the user, in response to the data collected about the user's activities; an intention prediction module, activated by the Service introduction and on-line help modules, for predicting the intention of the user; a user analytics module for performing intelligent user segmentations; a usability problem detection module, for providing insights about the user interactions by using an error pattern detection process; a marketing analytics module, for performing intelligent marketing based on active data-mining by activating the Service introduction module that promotes the applications to the user at the client side and collects feedback; an error patterns module, activated by the usability problem detector, for analyzing the session data that was collected from the users and for identifying patterns of problems that users repeatedly face and a task modeler at the backend, for modeling applications and for generating task models of applications.

## Description

### Field of the Invention

The present invention relates to the field of mobile communication devices. More particularly, the invention relates to a system for detecting and solving usability problems of users while using their mobile devices by tracking the users' interaction with applications and mobile services installed in those devices.

### Background of the Invention

In recent years, complex software systems which require user interaction, are no longer designated solely for professional users, and have become an everyday experience. Moreover, the functionalities provided by software systems are developing rapidly, adding complexity to the interaction with the user.

Usability refers to how well users can use, learn and interact with a product or a system such as a mobile device, a software application, a Web site, or any other device that requires user interaction, in order to achieve their goals. Usability is evaluated by:
- Quick learning: How well can a user learn to basically use the product for the first time?
- Efficiency: How fast are they able to accomplish tasks?
- Memorability: If users return to a product after not using it for a period of time, how easily do they remember how to accomplish tasks?
- Errors: How many errors do a user encounter, how severe are those errors, and how well does the product recover from errors?
- Satisfaction: From the user point of view, how satisfied is he from the product?

Usability should be considered in every stage of product design - from the initial stages of planning, to the late stages of testing. There are many methods to evaluate and test usability of products. Such methods can be based on usability experts, data gathered from users or a combination thereof. Methods to evaluate usability may incorporate interviewing users, testing and observing the users, creating computational models to estimate how long it would take users to accomplish a task, etc.

As competition grows, more and more companies realize that investing resources so that a product will create a user-friendly experience without usability problems, is of critical importance, beneficial to the company (from aspects such as higher revenues through sales, increased user efficiency, satisfaction and association to product), as well as reduced support costs. However, identifying such problems require a lot of time and funds, in some cases more than a company is able to invest.

All the methods described above have not yet provided satisfactory solutions to the problem of providing a system for detecting and solving usability problems of users while using their mobile devices by tracking the users' interaction with applications and mobile services and web applications.

It is an object of the present invention to provide a system for detecting and solving usability problems of users while using their mobile devices by tracking the users' interaction with applications and mobile services and web applications.

It is another object of the present invention to provide a system for detecting and solving usability problems of users that on-line tracks the users' interactions with applications without any intervention of the application developers.

It is a further object of the present invention to provide a system for detecting and solving usability problems of users that empowers communication companies to utilize the usage data for a broad range of application scenarios, and improve the usability of applications.

It is yet another object of the present invention to provide a system for detecting and solving usability problems of users that offers the user support in real-time.

Other objects and advantages of the invention will become apparent as the description proceeds.

### Summary of the Invention

The present invention is directed to a system for detecting and solving usability problems of users while using their mobile devices, which comprises:
a) an interception module at the user's side, for tracking the user's activities and interaction with applications, for generating session data that is stored in a session database;
b) a server that receives the tracked session data for performing intelligent analysis used to enhance usability of application, and for carrying out smart targeted marketing;
c) a service introduction module at the user's side, for providing data about relevant services to the user, in response to the data collected about the user's activities and according to pre-defined user and task models;
d) an on-line help module, for providing in context online help to the user, in response to the data collected about the user's activities;
e) an intention prediction module, activated by the Service introduction and on-line help modules, for predicting the intention of the user;
f) a user analytics module for performing intelligent user segmentations;
g) a usability problem detection module, for providing insights about the user interactions by using an error pattern detection process;
h) a marketing analytics module, for performing intelligent marketing based on active data-mining by activating the Service introduction module that promotes the applications to the user at the client side and collects feedback;
i) an error patterns module, activated by the usability problem detector, for analyzing the session data that was collected from the users and for identifying patterns of problems that users repeatedly face; and
j) a task modeler at the backend, for modelling applications and for generating task models of applications.

The system may further comprise visual reporting tools for generating reports regarding usability patterns; tools for providing guided assistance being adapted to the competence level of the user; tools for offering the user services that match his needs; a usability tool for automatically tracking usage data regarding testing and verification; a market research tool for monitoring real usage behaviour and usage needs; a CRM tool for prequalification of calls destined to a call-center; and a customer knowledge base for carrying out data-mining processes.

### Brief Description of the Drawings

The above and other characteristics and advantages of the invention will be better understood through the following illustrative and non-limitative detailed description of preferred embodiments thereof, with reference to the appended drawings, wherein:

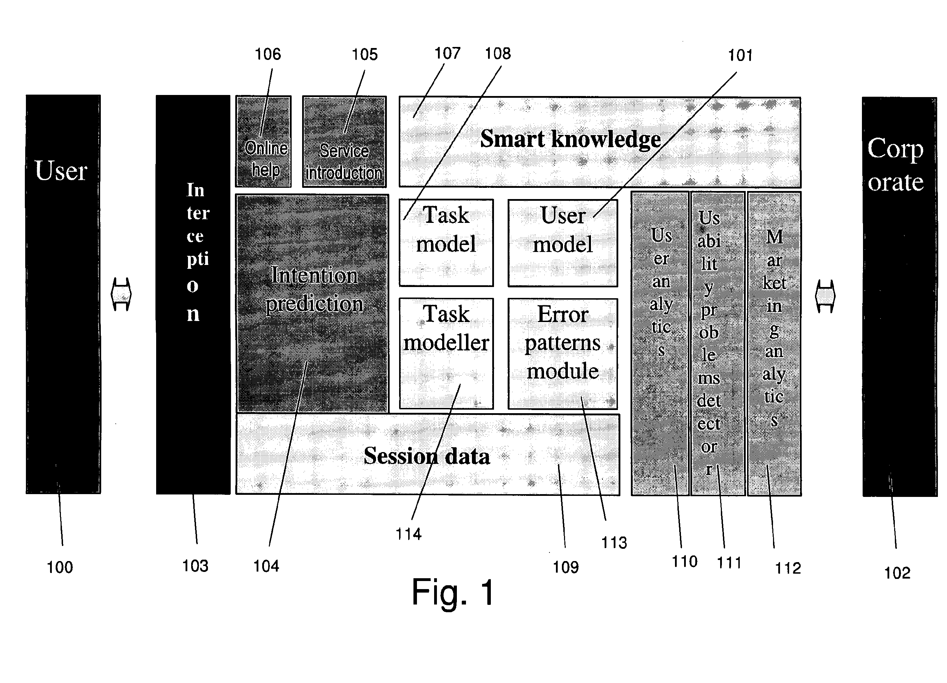

- Fig. 1 illustrates the architecture of a system for detecting and solving usability problems of users, according to an embodiment of the invention.

### Detailed Description of Preferred Embodiments

Fig. 1 illustrates the architecture of a system for detecting and solving usability problems of users, according to an embodiment of the invention. The system consists of a (mobile operating system - OS) platform independent client server solution. At the client side, the system is able to track on-line the users' interactions with applications (without the cooperation of the application makers). The system includes several modules for tracking of user interaction data on mobile devices, using the OS, native (basic original) functions, applications and web applications. The system interacts both with the user 100 and with the corporate 102. At the user's side 100, the interception module 103 tracks the user's activities. The tracked data are sent to a server for intelligent analysis that is used to enhance usability of application, and for smart targeted marketing. In response to the data collected about the user's activities, online help and promotion about relevant services are provided to the user. The promotion and on-line help modules (105 and 106, respectively) activate the intention prediction module 104, which predicts the user's intention. The on-line services also use pre-defined user and task model databases (107 and 108, respectively). The tracked data is collected into the "session data" in database 109 that is maintained by the system.

At the backend, the session data is undergoing intelligent analysis, namely, the user analysis module 110 performs intelligent user segmentations. The usability problem detector 111 activates an error pattern detection process to provide insights about the user interactions, and the marketing analysis module 112 predicts the best services and applications to be promoted to the most relevant users. All the analysis results are reported to the corporate 102 using graphical reporting tools. The system also includes a conventional reporting mechanism that enables visualization of the data in different formats (pie charts, graphs etc.) In addition, the system includes a usability hotspot tool that visualizes the usability of the applications that were tested. For each application the tool provides a colored icon representing its usability level (green for good, yellow for medium and red for bad) based on measures that the operator can define.

At the client, the system also offers on-line help that is based on the current user interaction and the intelligence gained from the analysis of former users.

Different technological tracking solutions were invented developed for different mobile Operating systems. For example, Israeli patent applications Nos. 203970 and 203971 disclose tracking methods for Windows Mobile^{®} and Symbian^{®} operating systems, respectively.

The proposed system includes the following modules:
**Interception Module 103** - used to track the user interaction with applications and to generate the session data (stored in session database 109) that is sent to the server.
**Online-help Module 106** - works on the client and used for providing on-line in context help for users, based on their current interaction and their known user model (e.g. history of interactions), which is stored in the User Model database 101.
**Service introduction Module 105** - works at the client and offers the customer new products according to the information that is sent from the marketing analytic module 112.
**Error patterns module 113** - is activated by the usability problem detector 111 and analyzes the session data that was collected from the users and identifies patterns of problems that users repeatedly face, such as specific screens where users are stacked at, or screens that are never used; non-optimal paths to complete tasks, etc. The error pattern module 113 is detailed in Israeli patent application No. 204508.
**Usability problem detector 111-** generates special visualized reports about usability problems in applications. It activates the Error patterns module 113 and is used for easy visualization of the usability problems in applications, as learned from the accumulated usage data using the error patterns module 113 and the intention prediction module 104.
**Intention prediction Module 104** - used to identify user intention based on their types and interactions. This module is used on-line top provide in-context help, and off-line when the users sessions are analyzed to understand what the users intended to perform in un-completed tasks. The Intention prediction module 104 is detailed in European Patent Application No. 10001497.6, filed on Feb. 15, 2010.
**User analytics Module 110** - used to generate reports and statistics about usage of applications (using intention prediction) for providing user insight into his status (e.g., proficiency per application) for correction or training. This module is used for segmenting users (e.g. according to proficiency level, communication and interaction needs, usage types) for e.g., targeted marketing, corporate campaign management, etc. This module uses the smart knowledge database 107 that was generated by the intention prediction module 104 that identifies meaningful user types. **Marketing analytics Module 112**- used for intelligent marketing based on active data-mining using session database 109 and smart knowledge database 107. It enables definition of services to be introduces to certain customers, based on smear analytics using active data-mining. This module identifies users that should receive promotions for specific applications and sends it to the clients. It activates the Service introduction module 105 that promotes the applications to the user at the client side and collects her feedback.
**Task modeller 114 (task modelling tool)** - used for modelling applications and for generating the task model, saved in database 108. This module (at the backend) enables usability experts to define task models of applications.

The above mentioned modules of the proposed system explore the usage of enabled applications and services and to make data analysis for the following scenarios:
a) Live Usability Help - for supporting users in real-time
b) Guided Assistance - to meet the user at his competence level and guide him step by step to empower him to use formerly unknown functions, features, applications.
c) Service Introduction - to meet the identified needs of the user and offer him services that match these needs. For example, assume a user who is a subscriber of T-Mobile (a German mobile telephone provider owned by Deutsche Telekom), uses an email mobile application (an application for reading, replying to, and forwarding emails using mobile devices) installed in his mobile device. He takes a picture using the camera of his cellular phone and wants to send it via email as an attachment. Assume that this feature is not possible with the installed email application since it does not support sending emails with attachment. In this case, the system identifies the intention of the user to send the picture and also identifies the gap between the user's intention and the capabilities of installed email application. As a result, the system offers the user a suitable service (such as Mobile Email Pro, mail2web.com of SoftCom Inc., Toronto, Canada), which allows him to send it. It also informs the user about the conditions of use.
d) As an internal Usability Tool - to automatically track usage data for friendly user tests on internal application testing and verification environments. The usability tool can be activated during different phases of application development.
e) As Market Research system for primary market research - in customer panels or field test to monitor real usage behaviour and usage needs. This includes questionnaires and analysis modules (e.g. for user experience) which are triggered to access user feedback in certain situations (e.g., completed transactions).
f) As Customer Relationship Management (CRM) Tool to reduce the load on call-center agents by prequalification of the call. For example, the widget (an element of a graphical user interface that displays information or provides a specific way for a user to interact with the operating system and with applications) framework on a customer device that crashes critically. The user is prompted to call Customer Services (CS). The system transmits the interaction data to CS agent, thus dramatically reducing the time for problem identification.
g) As Data Feed (a way for users to receive updated data from structured data sources) open to future developments. Providing the option for data warehouses and business intelligence systems to access prior non existing information - thus enabling the extraction of newly requested details of usage data (e.g., frequency of camera usage with face recognition or touch interaction based picture editing) for further storage and analysis in product definition and development.
h) As learning customer Knowledge Base - binding together different data sources (usage data, contract data, segment information, etc.) empowering a deep data-mining for intention prediction and relevance identification (e.g., for service introduction) and feeding back the info into heterogeneous data warehouses.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. A system for detecting and solving usability problems of users while using their mobile devices, comprising:
a) an interception module at the user's side, for tracking the user's activities and interaction with applications, for generating session data that is stored in a session database;
b) a server that receives the tracked session data for performing intelligent analysis used to enhance usability of application, and for carrying out smart targeted marketing;
c) a service introduction module at the user's side, for providing data about relevant services to the user, in response to the data collected about the user's activities and according to pre-defined user and task models;
d) an on-line help module, for providing in context online help to the user, in response to the data collected about the user's activities;
e) an intention prediction module, activated by said Service introduction and on-line help modules, for predicting the intention of said user;
f) a user analytics module for performing intelligent user segmentations;
g) a usability problem detection module, for providing insights about the user interactions by using an error pattern detection process;
h) a marketing analytics module, for performing intelligent marketing based on active data-mining by activating the Service introduction module that promotes the applications to the user at the client side and collects feedback;
i) an error patterns module, activated by said usability problem detector, for analyzing the session data that was collected from the users and for identifying patterns of problems that users repeatedly face; and
j) a task modeler at the backend, for modeling applications and for generating task models of applications.

2. A system according to claim 1, further comprising visual reporting tools for generating reports regarding usability patterns.

3. A system according to claim 1, further comprising tools for providing guided assistance being adapted to the competence level of the user.

4. A system according to claim 1, further comprising tools for offering the user services that match his needs.

5. A system according to claim 1, further comprising a usability tool for automatically tracking usage data regarding testing and verification.

6. A system according to claim 1, further comprising a market research tool for monitoring real usage behaviour and usage needs.

7. A system according to claim 1, further comprising a CRM tool for prequalification of calls destined to a call-center.

8. A system according to claim 1, further comprising a customer knowledge base for carrying out data-mining processes.
